Europäisches Patentamt

European Patent Office

Office européen des brevets

(11) Publication number: **0 301 709**
**A2**

## (12) EUROPEAN PATENT APPLICATION

(21) Application number: **88306009.7**

(22) Date of filing: **01.07.88**

(51) Int. Cl.⁴: **G02F 3/00** , **G02F 1/21** , **G06G 9/00**

The title of the invention has been amended (Guidelines for Examination in the EPO, A-III, 7.3).

(30) Priority: **02.07.87 US 69153**

(43) Date of publication of application:
**01.02.89 Bulletin 89/05**

(84) Designated Contracting States:
**AT BE CH DE ES FR GB GR IT LI LU NL SE**

(71) Applicant: **Yang, Tai-Her**
**5-1 Taipin Street**
**Si-Hu Town Dzan-Hwa(TW)**

(72) Inventor: **Yang, Tai-Her**
**5-1 Taipin Street**
**Si-Hu Town Dzan-Hwa(TW)**

(74) Representative: **Arthur, Bryan Edward et al**
**4 Dyers Buildings Holborn**
**London, EC1N 2JT(GB)**

(54) **Signal processing method based on wave effects.**

(57) A method of processing signals using the physical wave motion effects such as the light or sound diffraction and interference to join the wave motion sources, transmission elements, and detection elements in a specific structure according to specific principle, in which mainly the controlled two or more groups of the light or sound waves with a definite phase relationship to make the diffraction and interference effects in an enclosed space and, in coordination with the analogic detection and amplification and display elements that couples to the light or sound waves, to achieve the operation of AND, OR DECODER, INVERTER, FLIP-FLOP ENCODER with original light state, and digital processing, and multipoint branch output, etc. signal processing functions.

Fig. 8

EP 0 301 709 A2

# THE PROCESSING METHOD AND STRUCTURE OF THE WAVE MOTION EFFECT.

## BACKGROUND OF THE INVENTION

This application is a continuation application of European Patent Application No. 86307383.9. Further, it includes the original case interference diffraction caused by same phase multi set pointsinput light and input selection of the input points to change the position that interferring the lightening stripes, further causes the elements which accepts light, coupled with the screen, (including optical-fibre and light-elec transducing elements) varing intensity relatively. Because of the selection of the element which accepts light, the output may be obtained according to the input status of input point to decide the logic relation.

--- Compare with USA Patent 4531195: the application case has same phase light wave multi sets switchable light gate controlled and using diffraction and interference to produce logic means; bowever, USA Patent 4531195 disclosed is using piezo-electric effect modifing phase method to modify the inconsistent phase input light, the most important thing is the USA Patent 4531195 has no the idea to use interference to produce logic operation functions.

--- Compare with USA Patent 3582635: it is similar to USA Patent 4531195, and it uses high voltage magnetic field to USA Patent 4531195, and it uses high voltage magnetic field to modulate th light incident direction, the function and means are different from the application case.

--- Compare with USA Patent 3587063: USA Patent 3587063 has only single phase input light to produce diffraction as the processing means, it doesn't have processing means as application case has that is using interference. The structure and application level involved are quite different.

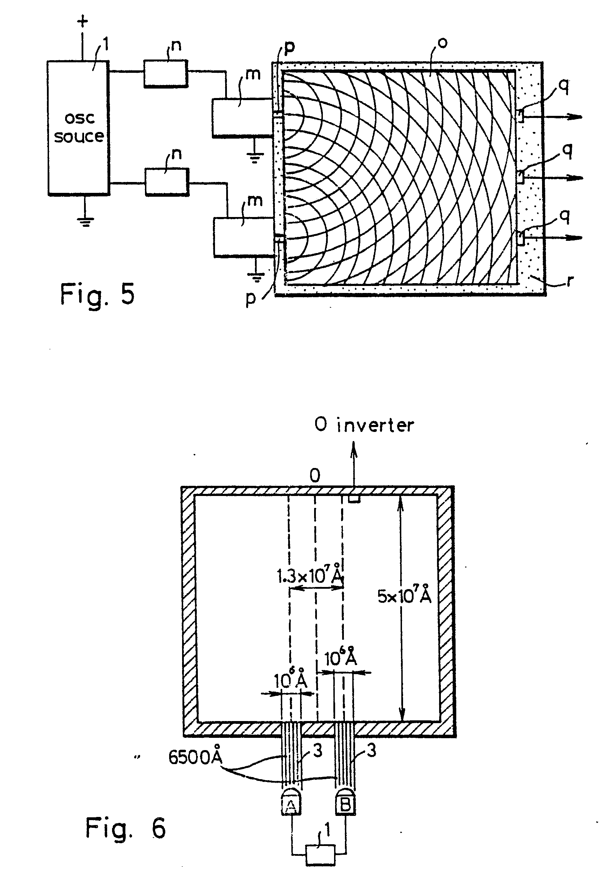

--- Compare with USA Patent 3861784: The application case doesn't have X or Y operation control device of light insident directions (see cited case Fig. 6) but purely using interference to perform the operation.

--- Compare with USA Patent 4386414: Cited case is using Holgraphic Optical Element for data processing, which does have the means that application case disclosed.

--- Compare with USA Patent 3776616: Cited case is using Polarization effect as switching means, not using interference means as application case disclosed.

--- Compare with USA Patent 4415226: Cited case doesn't disclose the presetable relative output point formed by two or more sets of same phase light input relation, and its input are a row of Interdigital Electronder that controlled with electricity. It is not as same as the application case directly using light form to perform the operation control.

This continuative case further discloses a structure that appliing light diffraction and interference to achieve multi point branch output or optical intensity amplifing inverter and Flip-Flop functions, to further extend the application of this design.

So that, this design is directly suing wave motion effect to perform logic functions such as AND, OR DECODER, ENCODER, INVERTER, FLIP-FLOP, etc, it is also using optical emthod to perfome light signal amplifing, light transmiting distribution switch.

When it is applied on practical products, it has many advantage such as electricity saving, anti-interference, high speed, low cost, no heat, wide operating temperature range and these are the feature of this design.

## SUMMARY OF THE INVENTION

As to the signal processing such as the digital pressing like AND, OR and DECODER, ENCODER, INVERTER, FLIP-FLOP ... etc., generally they are often processed by the mechanical processing devices or electrical signal processing devices under one inuariable principle that all the above-said mechanicla or electrical digital processing devices must be operated according to the program sequence, the therefore the more complicated the process, the longer the time required for operation, of which the mechanical processing devices are slow in responses, high in costs, and uneasy to maintain, and although the currently widely used electrical digital processing devices have many merits and have been practicalized, they still have defects in their resistances against the spurious noises and high temperatures and also heir speeds, the invention provides that, with the physical effects of the light or sound wave motion like diffraction and interference, the wave motion source, transmission elements and detection elements are joined in specific structures accouding to the specific principles to serve as the methods for processing the signals, i.e. mainly two or more controlled groups of light or sound waves in a definite phase relationship between them make the diffraction and interferrence effects multi branch output or inverteror Flip-Flop and, in coordination with the analogic detection and amplification and display elements that make the specific coupling with the said groups of light or sound waves, achieve the signal processing functions, as the object.

This design submits at least two sets controllable light or sound wave motion effect formed signal processing functions, and by means of its coupling with analog detecting and amplifing and display elements to compose the element that may perform logic and digital or analog operation functions for the user to choise and apply on the cases which they deemed appropriate.


## BRIEF DESCRIPTION OF THE DRAWINGS:

Fig. 1 is a view of the structure of the optical logic processing device.

Fig. 1-1 is a view of the structure of the mechanical masking gate.

Fig. 2 is a view of an example of the structure of optical two-group input logic device.

Fig. 2-1 is an example, when the A inputs the light diffraction strips.

Fig. 2-2 is an example when the B inputs the light diffraction strips.

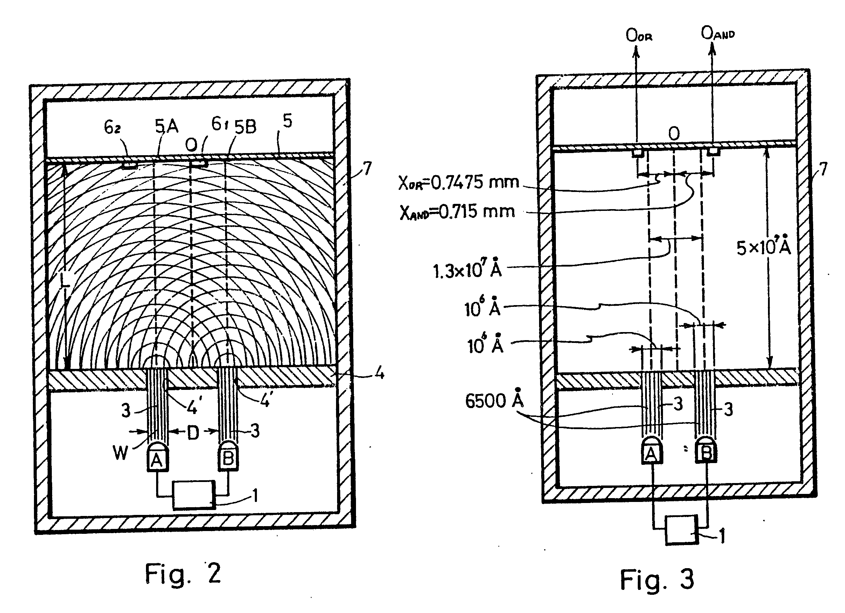

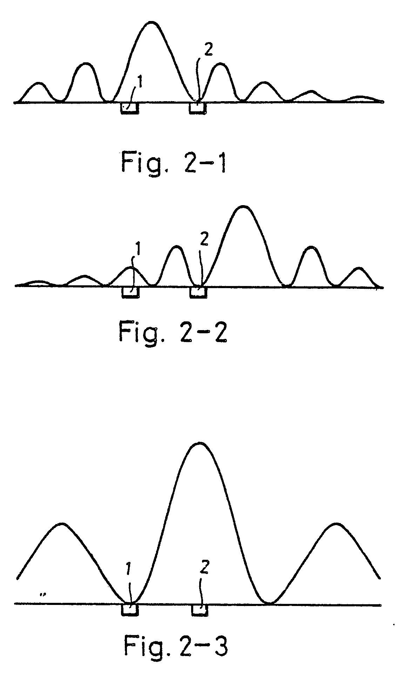

Fig. 2-3 is an example, when both A and B input the light interference strips at the same tiem.

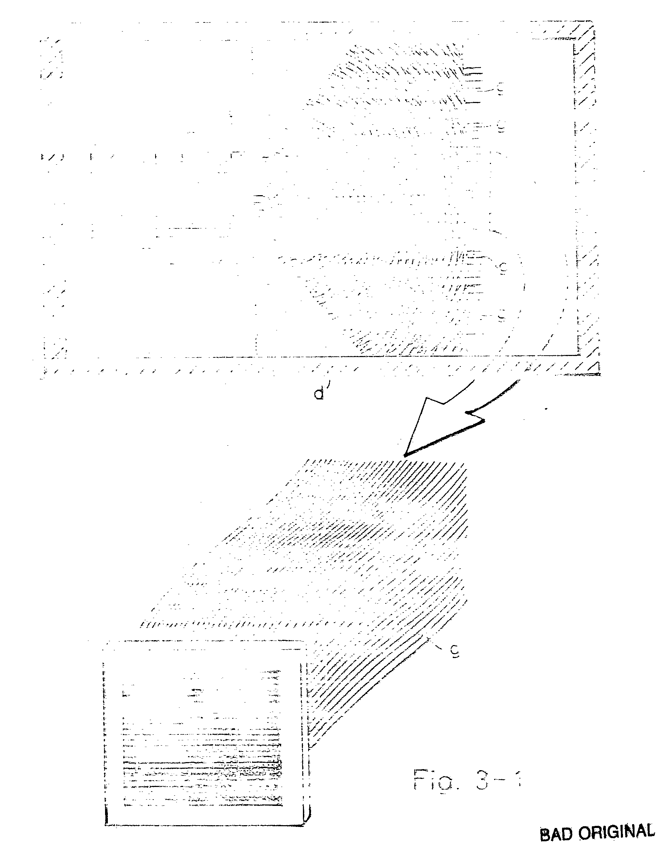

Fig. 3 is a relationship location map of the detection elements in the example shown in Fig.2, when $X_{OR}$ is the OR output.

Fig. 3-1 is an applicatory example of the example shown in Fig, 1 that the optical fibers directly guide the light to form the diagramatic decoding.

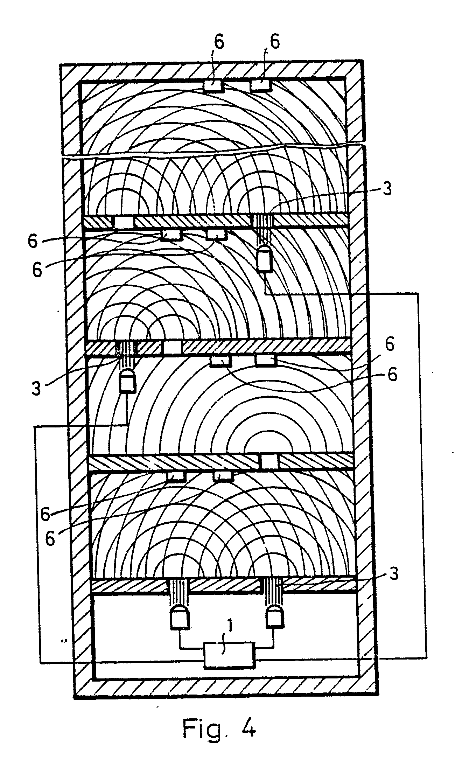

Fig. 4 is a view of the structure of the multi-step optical logic processing device.

Fig. 5 is a view of the structure of the sound wave effect-type logic processing device.

Fig. 6 is the block diagram of the interference effect inverter.

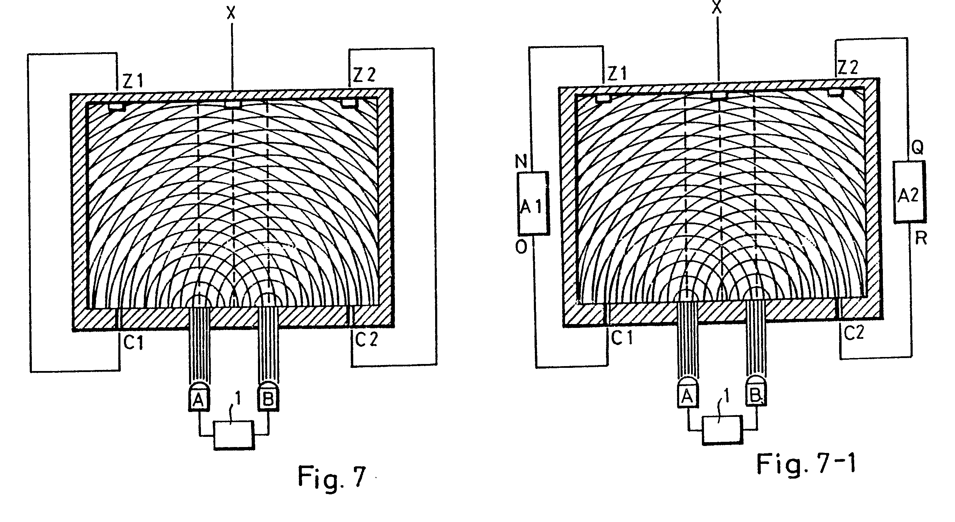

Fig. 7 is the block diagram of the interference effect bistates Flip-Flop device.

Fig. 7-1 is the block diagram of a light amplifier example add to the shown example of Fig 7

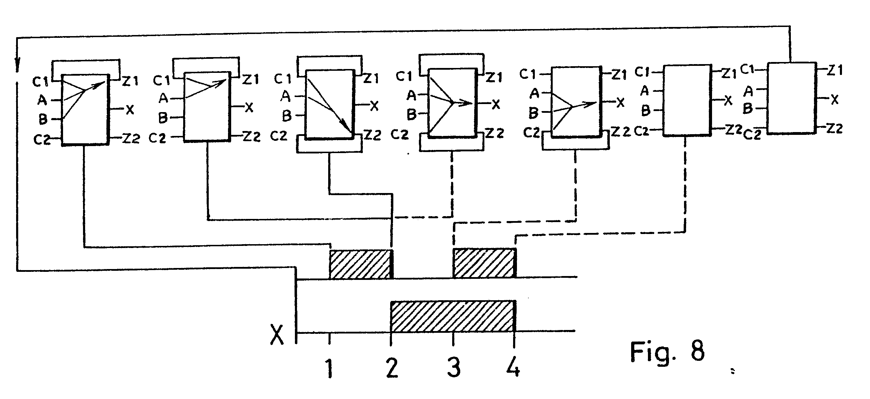

Fig. 8 is the flow chart of the action of the interference effect bistates Flip-Flop of Fig. 7.


## DETAILED DESCRIPTION OF THE INVENTION:

In the natural world, there are many pre-determinable and dependable physical phenomena for the people to recognize and use, for instance, all the machinery cams and gears have been originated from the principle of the inclined plane, and have also constituted the major elements of the hand operated calculator, another instance, the resistance, capacitance and inductance of hte electricity and the amplification functions of the semi-conductors or the switch functions, have constituted the basic elements of the computers, but for a long time, thepeople, in general, have often ignored the light or sound wave effects in the great nature including the diffraction and inter-ference phonomena, which, if specifically joined and arranged with proper operating and control elements and detection elements and display elements, will provide a useful device with new multi point branch output working in light physical state or inverter or Flip-Flop logic operation function and further with the analogic operation function at the same time, so here the invention discloses such design and applications and now respective examples of the optical and acoustic structures are described for the invention.

(A) In respect to the optical signal processing method and the main structure:

(1) Main structure is shown in the block diagram 1 comprising:

a. The single frequency light source generated by the laser-fixed frequency light souce or the common light source through a filter hood.

b. The light transmission conductor (such as the light conducting optical fibers).

c. The light input control gate (i.e. to operate and control if the light is put in the input hole e or not).

d. It has a closed space container.

e. The light input hole to generate and diffraction is provided on one side of d.

f. The light intensity detection element including the means to convert the light instensity into the electric signals is provided on the other side of the closed space container d that is opposite to the light input hole.

g. The light transmission element is provided on the other side of the closed space container d that is opposite to the lgiht input hole.

(2) In the above-said various component units, the light control gate comprises the following the follwing means:

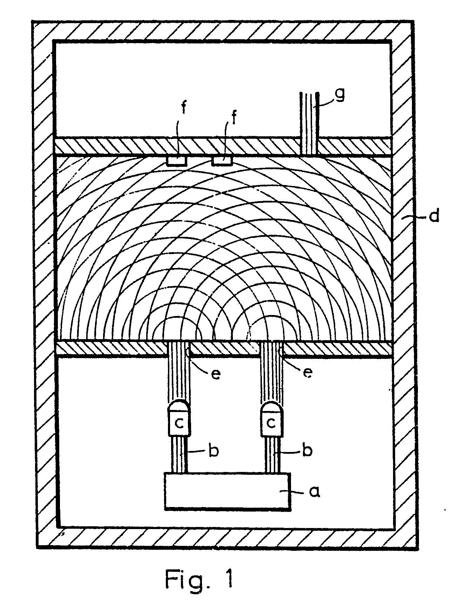

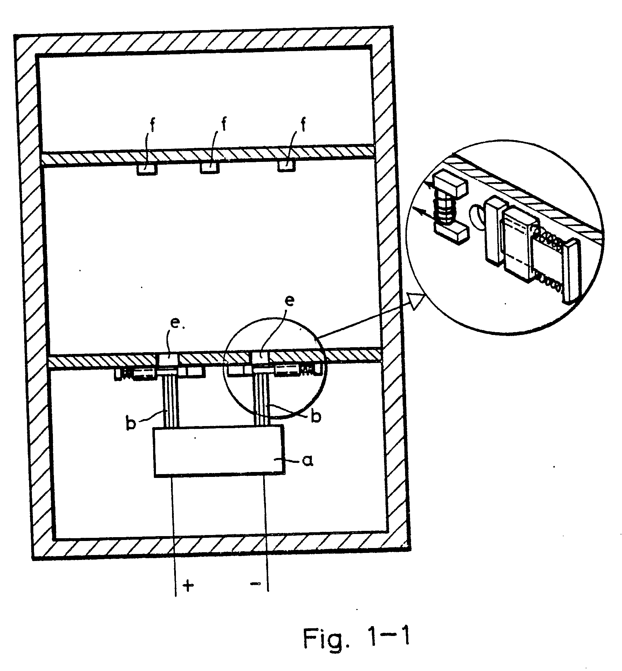

a. The mechanicla masking gate, i.e. at the light input hole. a drivable masking plate is provided as a

3

structure to be operated for masking or not masking to make the input in or not as shown in Fig. 1-1.

b. The DC magnetic field makes the light deviates away from the input hole, and this method is often seen in the laboratories

c. The high voltage static electric field generates the position deffection to make the lgiht deviate away from the input hole ( as shown in the Enclosure 1- the item developed by the swedish Ericssson Co. Telex No. 14910).

d. The electric current controls the colorchanging glass to make the light shielded off lcurrently the speed of this type is slightly slower) as shwon in the Enclosure 2 (from. Science Eyes, Taiwan Edition)

The above items (1) (2) (3) and (4) have been developed the more practicalized means which are cited as the actual evidence for the item C in the structural block of the invention.

(B) The basic work way of the logic precessing device utilizing the principles of the optical diffraction and its spectrum distribution is shown in Fig. 2 in which:

1 is the single frequency light source.

A and B are the operable light input control gate.

3 is the light-conducting element.

4 is the shield screen with a pin hole $4'$ thereon.

5 is the light screen.

$6_1$ is the photo-electronic element.

$6_2$ is the same to $6_1$.

7 is the enclosed outer shell.

Its action principle and process are described as follows: Since what the operable and controllable elements A and B transmit is the monochromatic light with the same frequency and phase, its input state comprises:

When A puts in the light but B do not put in the light or A does not put in the light but B puts in the light. the diffraction bars (strips) (as shown in Figs. 2-1 and 2-2) opposite to the changes of A and B are respectively displayed on the light screen 5, if the elements $6_1$ and $6_2$ are located on the bright bars and excited entirely depends on the distance X of the light screen shown in Fig. 2) and the light wave length $\lambda$ and the narrow seam width W.

$$i.e. \quad X_n = \left( \frac{n\lambda}{W} \right) L \longrightarrow dim$$

$$X_n = \left( m + \frac{1}{2} \right) \frac{L}{W} \longrightarrow bright$$

If A and B put in lights at the same time, the light interferrence spectrums of A and B are displayed on the fluorescent screen (as shown in Fig. 2-3), and if the elements $6_1$ and $6_2$ are located in the bright bars and excited entirely depends on the distance D between the two narrow seams and the light wave length

$$X_n = \left( P + \frac{n}{2} \right) \frac{\lambda}{D} L; \text{ if the two light are}$$

$$\text{the same, then}$$

$$X_n = \left( \frac{n\lambda}{2D} \right) L, \text{ where } n = 2,4,6,8\ldots \longrightarrow$$

$$\text{bright bar}$$

$$X_n = \frac{m\lambda}{2D} L, \text{ where } m = 1,3,5,7\ldots \longrightarrow$$

$$\text{dim bar}$$

i.e. through the mumber and position pre-arrangements of the elements $6_1$, $6_2$ or more phote-electronic elements or light-conducting elements on the fluorescent screen, its functions can be activated, for instance, when A puts in the light and B puts out the light, they generated the dim points, but when A and B both put in the light, the photo-electronic or light-conducting elements are provided at the positions of the bright points, the output end is the AND gate function; while other AND or DECODER, ENCODER functions are also the same.

Further, in this design, due attention shall be paid to the spectrum-changing factors affecting the logic grid includings:

a. The light source wave length $\lambda_1$ ,$\lambda_2$ ....., and the number of the narrow seams.

b. The light narrow seam intervals $d_1$, $d_2$......of the gate structure, and the widths of various light narrow seams $W_1$ , $W_2$ ...., and the distance L between the light narrow seam and the light screen.

Gerrally, the number light sources is the number of terms of the light grid input, the interference analyses for different light source wave lengths will be very complicated, to certain multi-functional logic grides or when it is desired to use a light gride replacing a certain logic circuit, a complicated analysis may get a light grid with different light wave lengths; to the design of comparatively simpler logic light gate, the same lgiht source wave lengths enjoy the first prority.

The adjustability of the phase differences of various light sources is a variable factor during the design, and the structural dimension of the grid is also a variable factor during the design, thus considerations should be given to the following:

a. The pre-determine and design the functions of the logic processing grid.

b. To pre-determine and design all the inputs and the required inputs (including the input/output lihgts and circuits) of the logic processing grid.

c. To lsit the individual ture and false charts between the output and input (or as called the ON-OFF relationship).

d. To take or delete the light sources shch as the number light sources (according to the inputs) the light source wave length, and phase difference.

e. To pre-set the dimension and sixe of thelight grid, such as D, L and W values.

According to the frators of the terms, b,c and and the pre-set dimension of hte term e, the position of the output point onthe fluorescent screen is analysed and designed, if the daid position cannot be located by this way, it maybe necessary to revert to the termd by re-determining the light source and re-setting the dimension of the light grid of dividing the branch grid, and then vevert to the term d;

further, its grids are designed respectively according to the relationships between various single factors and then their relationships between them are joined and finally merged one by one to the maximum possible merging limit.

The process to design the optical processing grid is described as follows:

(1) To pra-determine the functions of this logic

(2) To expressly list all its input terms

(3) To expressly list the chart of the true and false relationship between the output and input

(4) To determine the light source wave lengths and phase differences

(5) To set the deminsion of the light grid structure

(6) To analyze and design the position of the output point on the fluorescent screen.

5

```
(7)
       ┌────────────────┐
      ╱  to locate       ╲              (8)        if it is uneasy to
     ╱                     ╲      No  ────────→
    ╱   the positions       ╲                      locate the said
    ╲                       ╱
     ╲    of various       ╱                       positions, to list
      ╲                   ╱
       ╲  output points  ╱                         the branch grids
        ╲               ╱
         ╲             ╱                            vespectively, and
          ╲     Yes   ╱
           ╲─────────╱                             to design various
                │
                ↓                                  branch grids
(9)   │To complete the design│
                                                   respectively
```

Now the simple design examples are described as follows:

For instance, it is assumed: the grid functions are      to conduct the output to OR and AND of the two terms:

the input is    two input red lights ( = 6500 Å )

the true/false values of the output and input are

| $I_1$ | H | H | L | L |
|-------|---|---|---|---|
| $I_2$ | H | L | H | L |
| AND | H | L | L | L |
| OR | H | H | H | L |

the light source is    two input red lights with a wave length 6500 Å (from a filtered light or a stable laser source) and the two light sources are in the same phase (from the same light source).

It is assumed the dimension of the light grid is

$L = 5 \times 10^7$ Å

$W_1 = 10^6$ Å

$W_2 = 10^6$ Å

$D = 10^7$ Å

Then from the true/false table, we know:

6

$$(1)\ldots\ldots X_{AND} = \frac{n_1\lambda}{2} \cdot \frac{L}{D} \text{, where } n_1 = 2,4,6,8,\ldots$$

$$= \left(\frac{m_1\lambda}{W}\right) L \stackrel{+}{_-} \frac{D}{2} \text{, where } m_1 = 1,2,3,4,\ldots$$

$$= \left(\frac{K_1\lambda}{W_2}\right) L \stackrel{-}{_+} \frac{D}{2} \text{ where } K_1 = 1,2,3,4,\ldots$$

$$(2)\ldots\ldots X_{OR} = \frac{n_2\lambda}{2} \cdot \frac{L}{D} \text{, where } n_2 = 2,4,6,8,\ldots$$

$$= m_2 + \tfrac{1}{2}) \left(\frac{\lambda L}{W_1}\right) \stackrel{-}{_+} \frac{D}{2} \text{, where } m_2 = 1,2,3,4\ldots$$

$$= (K_2 + \tfrac{1}{2}) \left(\frac{\lambda L}{W_2}\right) \stackrel{-}{_+} \frac{D}{2} \text{, where } K_2 = 1,2,3,4\ldots$$

in which X $_{AND}$ is the distance of the AND output detection element (equivalent to 6$_1$ in Fig. 2) on the flourescent screen away from the central point of the interval between the two narrow seams corresponding to the point on the flourescent screen (the point O in fig. 2);

X$_{OR}$ is the length of the OR output detection element away from the distance of the point O las shown in Fig. 3) From the equation (1):

$$\left(\frac{m_1\lambda}{W_1}\right) L \stackrel{-}{_+} \frac{D}{2} = \left(\frac{K_1\lambda}{W_2}\right) L \stackrel{-}{_+} \frac{D}{2}$$

$$\frac{m_1\lambda}{W_1} L = \left(\frac{K_1\lambda}{W_2}\right) L \stackrel{-}{_+} D$$

$$\frac{m_1\lambda \times 5 \times 10^7 \overset{\circ}{A}}{10^6 \overset{\circ}{A}}$$

$$= \frac{I_i \times 5 \times 10^7 \text{Å} \pm 10^7 \text{ Å} \times 10^6 \text{ Å}}{10^6 \text{ Å}}$$

$$m_1 = K_1 \pm \frac{10^6 \text{ Å}}{5 \times 6500 \text{ Å}}$$

$$m_1 = K_1 \pm \frac{10^6 \text{ Å}}{5 \cdot 10^6 \text{ Å}}$$

(3) . . . . . . . $\quad m_1 = K_1 \pm \dfrac{10^6 \text{ Å}}{32500 \text{ Å}} \quad$ where $m_1 = 1,2,3,4,\ldots$
$\qquad k_1 = 1,2,3,4,\ldots$

Since

$$\frac{10^6 \text{ Å}}{32500 \text{ Å}}$$

is not an integen, it is unfittable.

To revert the light grid dimension, given $D = 9.75 \times 10^6$ Å (or $3.25\,P \times 10^6$ Å )
Then, the above equation (3) becomes :

$$m_1 = K_1 \pm$$

$$\frac{9.75 \times 10^5 \text{ Å}}{3.25 \times 10^4 \text{ Å}}$$

(4) $\quad = K_1 \pm 30$ (or $K_1 \pm 10P$ )
Here, assume $K_1 = 2$, then $m_1 = 32$,

$$\text{and} \quad \frac{n_1}{2} \quad \frac{L}{D} = \frac{M_1}{W_1} \, L \pm \frac{D}{2}$$

(5) $\quad$ thus $n_1 = (64 \pm 30) \times 9.75$ (or $n_1 = (64 \pm 30) \times 3.25P$)
As $n_1$ is an integer, it is unfittable.
From the equations (4) and (5), $m_1 = K_1 \pm 10P$
$n_1 = (2\,m_1 \pm 10P) \times 3.25P$
So P must make $3.25 \times P$ become as integer, give $P = 4$, then $3.25\,P = 13$,
revert to the light grid dimension, give $D = 1.3 \times 10^7$ Å, from the equation (1), $m_1 = K_1 \pm 40$,
$\quad$ assume $K_1 = 2$, $m_1 = 42$,
$\quad$ then $n_1 = (2m_1 - 10\,P) \times 13 = 572$,

8

$$\text{So } X_{AND} = \frac{n_1}{2} \quad \frac{L}{D} = 7.15 \times 10^{-2} \text{ cm} = 0.715 \text{ mm}$$

Similarly $m_2 = 3$, $K_2 = 43$, $n_2 = 598$

$X_{OR} = 7.475 \times 10^{-2}$ cm = 0.7475 mm

During the above dising process.

the input and output terms can be multiple terms.

if the output terms are m, while the input terms are n, then the true/falserelationship cart of their output terms has $2^n \times m$ relationships, because when the input terms are all false, no no functions are available, therefore various equations have $2^n - 1$ equal relationship with a total of $(2^n - 1) \times m$ equal relationship terms, each of which contains an integer to be determuned, so such integers must conform to their mutual relationship;

the dimensions and various light source wave lengths and phases to be determined will be variables. All the above disclosed are the various structural principles for the logic processing device by the light wave motion effects.

Fig. 3-1 is an example of the design of the invenetion applied to the Encoder which uses the optical fiber to directly conduct the light to form the grapics; for instance, a in this drawing is a single frequency light source which is used to supply the single frequency light wave, so the light conducting fiber b will conduct the light into the light input control gate c which goes through the light input hole e to form diffraction or interference that projects on the optical fiber bundle pre-selected and implanted on the lighted side walls on the closed container to serve as the light-con-ducting elements, while the other end of the optical fiber bundle is on the display screen, thus the optical fibers are arrayed according to the preset decoding function graphics so as to, in conjunction with the input state of the light input control gate, make the output of the corresponding function graphics, there by forming a decoding function of the graphics.

Besides, the above-said signal processing structure can also be a multi-step series type as shown in Fig. 4 that on the screens between various enclosed chambers joined and formed by the multi-layer enclosed chamber, the lighted elements or light-passing-through holes may be provided to receive new lgiht sources therein thereby enlarging the applicatory scope of it operations.

The above-said logic processing element compesed by the sound wave effects is structured by the blocks as shown in Fig.5 which includes:

1. : the electric power supply of the sound wave with the same frequency and phase;

m. : the electro-slund converter;

n. : the sound wave input controller, i.e. to operate and control if the sound wave is put in the input point or not;

o. : the sound-wave-conducting flaid matter or solid state matter placed in the closed container;

p. : the sound wave input point;

q. : the sound strength detection element (as electricity effect element);

r. : the sound energy damp diaphram which is placed on the same side as of the sound wave strength detection element and also on the outer shell of the sound-conducting matter to reduce the jamming caused by the refraction of the wave.

The principle of its action and design is the same to taht of the optical type.

Various elements it uses and its composition details are described as follows:

As known to all, when two continuous sound waves with the same frequency and phase called the aynchronous sound waves are used as the method to generate the above-said sound waves, generally a common wavemotion electric power supply drives the two electrosound converter with same specifications (in extremely small errors), the said electro-sound converter comprises the electricity type or electro-magnetic type, and generally the electricity type is smaller in volume and higher in accuracy, when the above two or more groups of the sound source are put in a solid body and then transmitted therein according to the sound speed in the above-said body, at least two or more groups of the sound source are transmitted therein, thus forming the interference phenomenon, and on the other side gradual sound damping strong point having the same optical interference phenomenon, now the element on the sound strength side is provided thereon and requires the logic function relationship distribution will reflect its sound strength to make corresponding physical phenomenal conversion, for instance, on the electricity effect element of the above-said Q, therefore when the operating and controlling electro-sound conversion element is to make the inputs of different arrangements and combinations according to the requirements, the detection element will generate the outputs in different sound strength, thus achiveing the logic operation functions, besides, the logic pricessing element of the sound wave effects may further have a pluarality of oscillation electric power wupplies and use various phase displucement methods lsuch as the conventional combined phase displacement among , L and C ) to further operate and control the phase relationships between and among various sound wave inputs, thereby achiveing broader operation functions (To change their relative phase relationshipos will make the distribution state of the sound strength projected on the detection element displaced in entirety)or further operate and control the frequencies of various oscillation sources to change the sound strength distribution state.

Besides, in the above-said optical or coustic device if and when changes are made on the input trength and the linear element is selected and used as the detection element installed on its detection position the logic operation can be further added with the analogic signal classification processing to over ride the limit of either "0" or "1" of the original logic processing device, thereby making it even more useful.

As to further basic logic element example of this case, it includes the inverter as shown in Fig6 :

--- Input A is constantly a continous light, Input B is controlled by light input control gate;

--- Invert output point is the position that when light inputs to B it is darkened, and when not input the light, (may be a multi points output). During operation, when the B input light is controlled and darkened, the output point will present lightened state; when B input light is controlled and lightened, because of the interference the output point presents lightened state and forms the inverter action logic.

As to the example of bistated Flip Flop device function by means of wave motion interference effect, it is shown as Fig. 7 and Fig 7-1. It mainly provides counting, binary division and digital logic applications formed by other wave motion effect gate, it is comprised of:

--- two input light control gate A and B which both receive the same light source input, and A is lightened constantly;

--- light control gate B is the signal input gate for producing the pulse non-continous signal input;

--- output gate X is the output gate, generates light siganl output that is the input pulse signal divided by 2;

--- the first self-close gate set include from the light output point Z enter input gate C1, and interfering A, B input light; above mentioned light output point Z1 transmitted through optical fibre then enter Gate C1; or as shown in Fig 7-1 in the jiddle there is additional light amplifier Al;

--- the second self-close gate set include from light output point Z enter light input gate C2 and interfering the original light; above mentioned output point Z2 may also transmit directly through optical fibre to input gate C2; or as show in Fig. 7-1 in the middle there is an additional amplifier A2;

--- light amplifier A1 has a input gate N which is connected with Z1 through opticla fibre and the light amplifing is by means of electric;

--- light amplifier A2 has input gate Q which is connected with Z2 through optical fibre and a output point R which is connected with C2 through opticla fibre.

Therefore, the action principle and action process of above examples are shown as Fig 8:

1. When input gate A is lightened, output points X, Z1,Z2 all are darkened, the input gate of C1, C2, and B are darkened.

2. When light pulse coming to B point, light input gate A is constantly lightened, when B is also lightened, an interference will be generated lighten Z1 and then lighten C1, at this time, A, B, C1 interferencing among each other. Z2, X both are darkened, Z1 is still lightened (if a light amplifier A is installed, because Z1 passing through optical fibre and transmitted to N, so its output point O is also lightened, and then transmitted to C1 through optical fibre).

3. When B point light pulse finished, input gate A constantly lightens, it forms a new interference with C1 and maked Z1 maintaining lightened, but Z2 is also lightened, Z2 is also lightened, Z2 transmits light to C2 through optical fibre (if a light amplifier is installed, then the input gate Q of light amplifier A2 is lightened, R is also output to C2 throught optical fibre) and then A, C1, and C2 form a new interference that makes the Z1, Z2 and C2 form a new interference that makes the Z1, Z2 and X output is lightened, and remain the state

4. When B input gate agin waving input, A, B C1 and C2 form a conbimed interference that makes C1 darkened, C2 and X lightened, and remain the state.

5. When B input gate waving input interrupted, C1,C2 X all are darkened, and remain the state.

6. If 1. occoured again.

We may find the relation of above output X and input B signal pulse number is 2X = B, so it can be result of division. This division relation with above mentioned OR, AND, ENCODER, DECODER, INVERTER will from the foundation of CPU. The relative relation between, A, B, C1, C2 input points and Z1, Z2, X output points of above mentioned processing are as follows:

--- The conditions that C1 (Z1) is high output are:

A and B both are input; or

A, B, C1 exist simultaneously; or

A, C1, C2 exist simultaneously; or

A and C1 exist simultaneiously.

--- The conditions that output interrupted are:

A, B, C1, C2 exist simultaneously; or

A, B C2 exist simultaneously; or

only A.

Summing all the above up, the invention is indeed a practicalized movel design theory and can be applied for realization to serve as a useful design case.

## Claims

1) A signal processing method using the physical wave motion effects such as the light or sound diffraction and interference to join the wave motion sources, transmission elements, and detection elements in a specific structure according to specific principle, in which mainly the controlled two or more groups of the light or sound waves with a definite phase relationship to make the diffrection and interference effects in an enclosed space and, in coordination with the analogic detection and amplification and display elements that couples to the light or sound waves, to achieve the operation of AND , OR, DECODER, INVERTER, FLIP-FLOP, ENCODER with original light state, and digital processing, and multipoint branch output, etc. signal processing functions.

2) The optical signal pricessing method and its main structure of the Claim 1) comprise:

--- the single frequency light source generated by the laser-fixing frequency light source or the common light source through the filter hood;

--- the light transmission conductor (such as the light-conducting (optical) fibers);

--- the light input control gate (i.e. to operate and control if the light is put in the input hole or not);

--- it has a closed space container

--- the light input hole to generate the diffraction is provided on one side;

--- the light intensity detection element including the means to convert the light intensity into the electric signals is provided on the other side of the closed space container that is opposite to the light input hole;

--- the light transmission element is privided on the other side of the closed space container that is opposite to the light input hole.

(3) The device of the Claim 2 further features that the formed diffraction and interference. Projects on the optical fibers bundle which is pre-selected and implanted on the lighted side walls on the closed container to serve as the light-conducting elements, while hte other end of the optical fibers are arrayed accoridng to the pre-set decoding function graphics So as to, in conjunciton with the input state of the lgiht input control tate, make the output of the corresponding function graphics, thereby forming a decoding funciton of he graphics.

(4) Claim 1 mentioned that the multi points branch output produced by means of diffraction is provided to generate multiplex separate phase interparting branch output at the fixed point on screen that installed a output at the fixed point on screen that installed a output optical fibre or other light-elec conversion elements.

(5) Claim 1 mentioned optical inverter device is mainly comprised of :

--- Input A is constantly a continuous light, input B is controlled by light input control gate;

--- Invert output point is position that when B input light is dark and when light input to B is lightened (it may also be multi point output), during the operation, when B input light is controlled as darkened output point will present lightened state; when B input light is controlled as lightened, because of the interference which makes the output point present darken state and form the inverter action logic.

(6) Claim 1 mentioned optical bistates flif flop device that by means of wave motion interference effect is provided for counting, binary division and application of digital logic formed by other wave motion effect gates, it is mainly comprised of :

---two input light control gate A and B , both receive same light source input, A is consitantly lightened;

---light control gate B is the signal input gate for producing input of pulse non-continuous signal;

---Output gate x is the output gate, which may produce light signal output hat is the result of light control gate B input pulse signal divided by 2;

---the first self-closed gate set include: from light output Z through the output point of light amplifier A1 and goes into light input gate C1, then interfering with A, B input light or from above mentioned light output point Z1 directly transmit through optical fibre to input gate C1;

---the second self-close gate set include: from light output point Z to the output point of light amplifier A2 then goes into light input gate C2 and interfering with the original light; or from above mentioned light output point Z2 directly transmits to input gate C2 through optical fibre;

---Light amplifier A1 is the leectricity amplifier that having input gate Q connected to Z2 through optical fibre and the output R connected to C2 through optical fibre.

Its action processing are as follows:

1. When input gate A lightens, output points X, Z1, Z2 all are darkened, C1, C2 and B input gate all are darkened;

2. When B point light pulse coming, light input gate A constantly lightened. When B is also lightened, then will produce a interference to lighten Z1 and lighten C1, at this time, A, B, C1 will interfer among each other, Z2, X both are darkened, Z1 still lightens (if a light amplifier A is installed, then because Z1 transmit throught optical fibre to N and its output O is therefore also lightened, then transmit to C1 through optical fibre).

3. When B point light pulse finished, input gate A constantly lightened, it will form a new interfernece with C1, makes Z1 lightened, but Z2 also lightened, Z2 transmits to C2 throough optical fibre (if a light amplifier A2 is installed, then its input gate Q is lightened, R is also output as lightened and transmit to C2 through optical fibre), and then, A, and C1 and C2 will form a new interference makes the Z1, Z2, and X output as lighten, and remain the state.

4. when B input gate has wave motion input again, A, B, C1, C2 form a combined interference which will darken C1, C2 and x remain lightened, and maintain the state.

5. when B input gate wave motion interrupted, C1, C2, X all are darkened, and remain the state.

6. Repeat from 1

During the above processing, the relative relation of A, B C1, C2 input points and Z1, Z2, X output points are as follows:

--- The conditions the C1 (Z1) is high output are:

A and B both are input; or

A, B, C1 exist simultaneiously; or

A, C1, C2 exist simultaneiously; or

A nad C1 exist simultaneiously.

Its output interruption conditions are:

A, B, C1, C2 exist simultaneiously; or

A, B, C2 exist simultaneiously, or

only A exists.

--- The conditions that C2 (Z2) is high output are:

A nad C1, C2 exist simultaneously; or

A and C1 both exist; or

A, B, C1 exist simultaneiously.

Its output interruption conditions are:

A, B, C1 exist simultaneiously; or

A and C1 exist simultaneously.

Above existing conditions are the basic rules of the relative relation among the output points nad input points.

7. The above-said logic processing element composed by the sound wave effects of the claim (1) , wherein its structure comprises:

--- the electric power supply of thesound wave with the same frequency and phase;

--- the electro-sound converter;

--- the sound wave input controller, i.e. to operate and control if the sound wave is put in the input point or not;

--- the sound-wave- conducting fluid or solid state matter matter placed in the closed container;

--- the sound wave input point;

--- the sound energy damp diaphram which is placed on the same side as of the sound wave strength detection element and also on the outer shell of the sound-conducting matter to reduce the jamming caused by the eave refraction.

(8) The logic process element of the sound wave effects of the Claim 8) further has a plurality of the oscilation power supplies and uses various phase displacement mehtods (such as the conventional combined phase displacement among R, L and C) to further operate and control the phase relationship between and among various sound wave inputs, thereby achieving broader operation functions (to change their relative phase relationships will make the distribution state of the sound strength, projected on the detection element displaced in entirety) or further operate and control the frequencies of various oscillation sources to change the sound strength distribution state.

(9) In the optical or acoustic device of the Claim 1) if a changed are made on end when the input strength and he linear element is selected and used as the detection element installed on its detection point, may further make the logic operation added with the analogic signal classifincation processing, the limit of either " O " or " 1" of the original logic processing device.

Fig. 1

Fig. 1-1

Fig. 2

$X_{OR}=0.7475$ mm

$X_{AND}=0.715$ mm

$1.3 \times 10^7$ Å

$10^6$ Å

$10^6$ Å

6500 Å

$5 \times 10^7$ Å

Fig. 3

EP 0 301 709 A2

Fig. 2-1

Fig. 2-2

Fig. 2-3

d'

Fig. 3-1

Fig. 4

Fig. 5

Fig. 6

Fig. 7

Fig. 7-1

EP 0 301 709 A2

Fig. 8